# EUROPEAN PATENT SPECIFICATION

(11) **EP 4 368 819 B1**
(45) Date of publication and mention of the grant of the patent: **29.01.2025**
(21) Application number: 23383066.0
(22) Date of filing: 19.10.2023
(51) Int. Cl.: F01N 13/18, B60K 13/04, F16F 1/373

(54) **FIXING DEVICE FOR CONNECTING A FIRST COMPONENT TO A SECOND COMPONENT**
BEFESTIGUNGSVORRICHTUNG ZUM VERBINDEN EINES ERSTEN BAUTEILS MIT EINEM ZWEITEN BAUTEIL
DISPOSITIF DE FIXATION POUR RELIER UN PREMIER COMPOSANT À UN SECOND COMPOSANT

(30) Priority: 09.11.2022 EP 22383078
(43) Date of publication of application: 15.05.2024
(73) Proprietor: Cikautxo, S. Coop., 48710 Berriatua (Vizcaya) (ES)
(72) Inventor: AZPIAZU ECHAVE, Iñaki, 48270 MARKINA - XEMEIN (ES)
(74) Representative: Igartua, Ismael

(56) References cited:
- WO-A1-2018/038302
- DE-A1- 102016 004 746

## Description

### TECHNICAL FIELD

The present invention relates to fixing devices capable of connecting and fixing an exhaust pipe to a vehicle chassis.

### PRIOR ART

Fixing devices capable of attaching a first component to a second component are known. Said fixing devices can, for example, attach a vehicle exhaust pipe (first component) to a vehicle chassis or body (second component). These fixing devices are usually made of rubber to absorb vibrations of the first component, but they must in turn be rigid enough to support the static loads to which said fixing device is subjected, for example, the weight of the first component hanging from the fixing device itself. The fixing device can be fixed to the vehicle in different ways, but the first component is usually hung from the fixing device. In the case where the first component is an exhaust pipe, it usually comprises a securing element, with a widened end, which is inserted into a hole of the fixing device, such that the exhaust pipe is suspended on the vehicle through one or more fixing devices. To prevent the possible detachment of the exhaust pipe from the fixing device, the hole from which the exhaust pipe hangs is often reinforced with a metal bushing.

In this sense, US20200256239 A1 describes a fixing device which connects an exhaust pipe to a vehicle body. The fixing device comprises an elastic main body comprising a connecting area into which a securing element of the exhaust pipe with a widened head is inserted. The fixing device also comprises a reinforcement which reinforces the connecting area preventing the removal of the widened head of the securing element of the first exhaust pipe.

DE102016004746 A1 describes a hedge trimmer having an exhaust gas silencer coupled to an elastic first tube to allow the exit of the gases. The joining between the silencer and the first tube forms a fixing device, an outlet connector of the silencer being housed inside the first tube. The first tube may also comprise a metallic spring arranged in a housing of the first tube or embedded therein but in such a way that the outlet connector of the silencer is in direct contact with the spring when it is inserted in the first tube.

### DISCLOSURE OF THE INVENTION

An object of the invention is to provide a fixing device as defined in the claims.

Another object of the invention is to provide a motor vehicle comprising a chassis, an exhaust pipe, and said fixing device.

The fixing device of the invention is suitable for fixing an exhaust pipe to a vehicle chassis, said fixing device comprising an elastic main body configured to be coupled to the vehicle chassis, the main body comprising a connecting area in which a securing element of the exhaust pipe is introduced. The securing element of the exhaust pipe comprises a widened head which is adapted so that, upon passing through the connecting area, it is retained and fixed in the main body. The fixing device further comprises a reinforcement surrounding the connecting area and being adapted to reinforce the connecting area preventing the removal of the widened head of the securing element of the exhaust pipe. Said reinforcement is a helical spring having the free ends oriented towards the inside of the helical spring.

The fixing device of the invention allows the securing element of the exhaust pipe to be readily inserted into the connecting area while preventing it from being able to be accidentally removed from the connecting area. Upon inserting the securing element into the connecting area, the widened head moves forward through the connecting area, pushing in its forward movement the helical spring such that it expands radially allowing the main body surrounding the connecting area to deform so as to allow the passage of the head of the securing element. The widened head of the securing element is usually preceded by a chamfer which favors the radial expansion of the helical spring. However, when the securing element is moved in the opposite direction for its removal, generally by accident, the widened head, which is retained by the main body surrounding the connecting area, tends to compress the spring longitudinally and not expand it radially, i.e., the helical spring is compacted and becomes more rigid, preventing the main body surrounding the connecting area from deforming, and therefore further increasing resistance to the passage of the widened head of the securing element in the opposite direction.

These and other advantages and features of the invention will become apparent in view of figures and detailed description of the invention.

### DESCRIPTION OF THE DRAWINGS

Figure 1 shows a sectioned perspective view of an embodiment of the fixing device according to the invention, with the reinforcement being embedded in the main body of the fixing device.
Figure 2 shows another sectioned perspective view of the fixing device of Figure 1, with said fixing device being assembled in a connecting element and the securing element of the exhaust pipe being inserted into the connecting area of the fixing device.
Figure 3 shows a perspective view of an embodiment of the reinforcement of the fixing device of Figure 1.
Figure 4 shows another perspective view of the embodiment of the reinforcement of the fixing device of Figure 3.
Figure 5 shows a sectioned perspective view of another embodiment of the fixing device according to the invention.

### DETAILED DISCLOSURE OF THE INVENTION

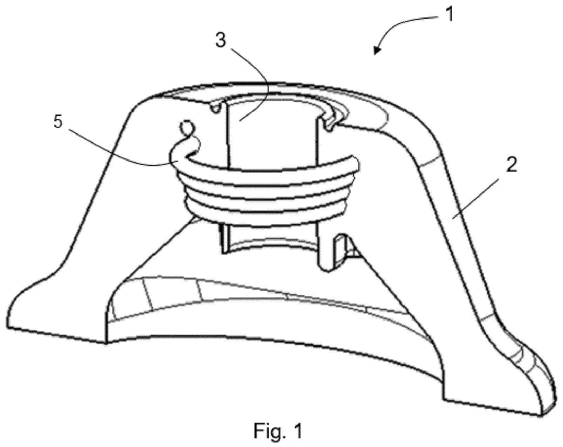

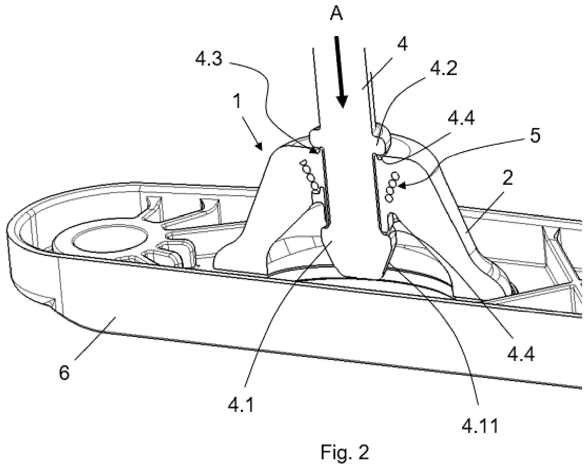

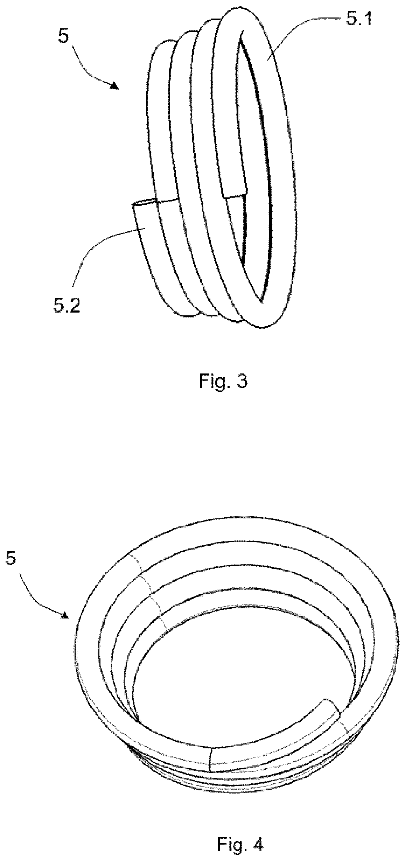

The fixing device 1 of the invention shown in Figure 1 is suitable for fixing an exhaust pipe (first component) to a vehicle body or chassis (second component), said fixing device 1 comprising an elastic main body 2 configured to be coupled to the vehicle chassis and to the exhaust pipe, the main body 2 comprising a connecting area 3 in which a securing element 4 of the exhaust pipe is introduced. The securing element 4 of the exhaust pipe comprises a widened head 4.1 which is adapted so that, upon passing through the connecting area 3, it is retained and fixed in said connecting area 3, as shown in Figure 2. The fixing device 1 further comprises a reinforcement 5 surrounding the connecting area 3 and being adapted to reinforce the connecting area 3 in order to prevent the accidental removal of the widened head 4.1 of the securing element 4 of the exhaust pipe. Said reinforcement 5 is a helical spring, as shown in the non-limiting example of Figure 3.

The fixing device 1 of the invention allows the securing element 4 of the exhaust pipe to be readily inserted into the connecting area 3 of the main body 2, according to a direction of insertion A, while preventing it from being able to be accidentally removed from the connecting area 3. Upon inserting the securing element 4 into the connecting area 3, the widened head 4.1 moves forward through the connecting area 3, pushing in its forward movement the helical spring such that it expands radially allowing the main body 2 surrounding the connecting area 3 to deform so as to allow the passage of the head 4.1 of the securing element 4. The widened head 4.1 of the securing element is usually preceded by a chamfer 4.11 which favors the radial expansion of the helical spring. However, when the securing element 4 is moved in the opposite direction for its removal, generally by accident (for example, due to an impact), the widened head 4.1, which is retained by the main body 2 surrounding the connecting area 3, tends to compress the spring longitudinally and not expand it radially, i.e., the helical spring is compacted and becomes more rigid, preventing the material of the connecting area 3 from deforming radially, and therefore further increasing resistance to the passage of the widened head 4.1 of the securing element 4 in the opposite direction (opposite the direction of insertion A).

In the preferred embodiment of the invention, the reinforcement 5 is embedded in the main body 2 such that the reinforcement 5 surrounds at least part of the connecting area 3, as depicted in Figure 1 in which the main body 2 has been sectioned to improve understanding.

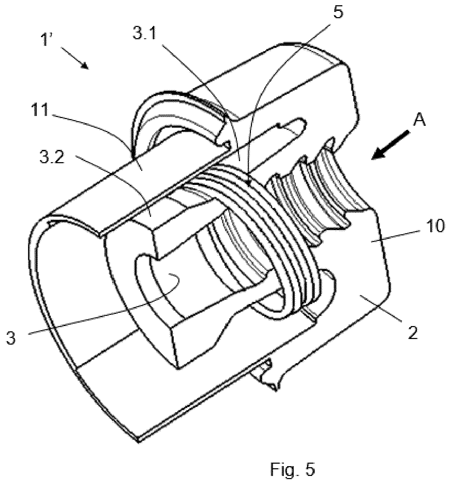

The connecting area 3 comprises an opening which is in contact with part of the securing element 4 of the first element when said securing element 4 is inserted into the connecting area 3. In the preferred embodiment of the invention, said opening is a through hole with the securing element 4, more specifically the widened head 4.11, passing therethrough, said through hole having a preferably circular section, although it could also be elliptical, for example, since the securing elements of exhaust pipes are often cylindrical, generally in the form of a pin, although said hole can have a notched segment to favor the insertion of the securing element 4, as shown in the embodiment of Figure 5, and/or to reduce the contact area with the securing element 4, thereby reducing the transmission of vibrations from the exhaust pipe to the vehicle chassis. In this sense, instead of the notched segment, the through hole may also comprise a segment with at least one protuberance to reduce the contact area with the securing element 4. Both the notched segment and the segment with the protuberance may also contribute to reducing the clearance between the securing element 4 and the through hole, which clearance can be generated as a result of the expansions that both the securing element 4 and the connecting area 3 may experience when the fixing device 1 is in use, thereby preventing the noise that could be generated due to said clearance.

In the preferred embodiment of the invention, the helical spring is coaxial with the through hole of the connecting area 3, as can be seen in the figures, and as can be deduced, the reinforcement 5 surrounds at least part of the through hole of the connecting area 3.

The securing element 4 of the exhaust pipe comprises a retaining ring 4.2, spaced from the widened head 4.1, such that an axial recess 4.3 is generated between the widened head 4.1 and the retaining ring 4.2. Once the securing element 4 is inserted into the connecting area 3, the material of the connecting area 3 surrounding the through hole is housed in the axial recess 4.3 of the securing element 4, with the securing element 4 being retained and fixed in the main body 2 surrounding the connecting area 3, as can be seen in Figure 2. The axial recess 4.3 of the retaining element 4 is therefore demarcated by two abutting walls 4.4, one located in the widened head 4.1 and the other in the retaining ring 4.2. When the securing element 4 is accidentally moved in a direction opposite the direction of insertion A in order to remove same, the abutting wall 4.4 of the widened head 4.1 axially pushes the main body 2 which cooperates with said abutting wall 4.4. The main body 2 in turn transmits said axial force to the spring 5 which tends to compress it longitudinally. The helical spring is compacted and becomes more rigid since the coils of the spring tend to come together, complicating the radial expansion thereof, thereby hindering the passage of the widened head 4.1 through the through hole of the connecting area 3 for removing the securing element 4. However, when inserting the securing element 4 according to the direction of insertion A, the chamfer 4.11 of the widened head 4.1 of the securing element 4, preceding the abutting wall 4.4 in the direction of insertion A, tends to radially expand the main body 2 surrounding the through hole of the connecting area 3 during its passage. The coils of the helical spring of the reinforcement 5 therefore also expand radially one by one as the widened head 4.1 moves forward through the connecting area 3, allowing the securing element 4 to be readily inserted. When the widened head 4.1 has gone through the connecting area 3 completely, the helical spring recovers its natural state, i.e., the state before the insertion of the widened head 4.1, with the main body 2 surrounding the through hole of the connecting area 3 being retained in the axial recess 4.3 of the securing element 4 of the exhaust pipe between the abutting wall 4.4 of the widened head 4.1 and the abutting wall 4.4 of the retaining ring 4.2. In the context of the invention, said natural state of the reinforcement 5 is referred to as the first position. The fixing assembly formed by the fixing device 1 and the securing element 4 of the exhaust pipe is therefore firmly fixed.

In the preferred embodiment of the invention, the helical spring is a frustoconical spring comprising a widened end 5.1 and a narrowed end 5.2, the narrowed end 5.2 of the reinforcement 5 being arranged in the main body 2 in a position after the widened end 5.1 according to the direction of insertion A of the securing element 4 of the exhaust pipe. The widened end 5.1 of the helical spring facilitates the insertion of the widened head 4.1 of the securing element 4 during the insertion of the securing element 4 into the connecting area 3, particularly at the start of the insertion process, favoring the radial expansion of the helical spring.

The fixing device 1 can be fixed to the vehicle in different ways. In the preferred embodiment of the invention, the fixing device 1 is attached to a support 6, preferably metallic, as shown in Figure 2, which is fixed to the vehicle body or chassis through fixing elements, such as screws or rivets, for example. The main body 2 of the fixing device 1 can be, for example, overmolded in the support 6 or could be fixed by pressure in a housing of said support 6. In another embodiment not shown in the drawings, the fixing device 1 may comprise a second connecting area to allow the insertion of a securing element, for example a pin, of the vehicle body or chassis (second component). The fixing device 1 would therefore hang from the vehicle chassis (second component), and the exhaust pipe (first component) would hang from the fixing device 1.

In the preferred embodiment of the invention, the reinforcement 5 is adhered to the main body 2 by means of an adhesive, thereby preventing a relative movement between the reinforcement 5 and the main body 2 when the fixing device 1 is in use. In other words, as a result of the adhesive preferably applied by priming, a chemical attachment is generated between the material of the main body 2 and the reinforcement 5, such that when one of the two deforms, it drives the other along with it, since they both behave like a single body in the proximity of the area where the reinforcement 5 is located, thereby preventing the reinforcement 5, for example, from being able to rotate inside the main body 2.

As can be seen in Figure 4, the free ends of the helical spring are oriented towards the inside of the spring, thereby preventing sharp edges which may damage the material of the main body 2 surrounding the reinforcement 5. In other words, at the ends of the spring the natural progression of the cone of the helicoid is altered by orienting said ends towards the inside of the spring, as shown in Figure 4, such that the ends of the spring do not project from same.

The helical spring of the reinforcement 5 of the invention comprises a wire the diameter of which is in a range of between 1 mm and 2.5 mm, preferably between 1.2 mm and 1.8 mm, said diameter preferably being 1.5 mm. This size allows obtaining a spring which is robust enough so as to reinforce the connecting area 3, as described, and to ensure that the reinforcement 5 does not deteriorate regardless of the magnitude of the insertion force applied when introducing the securing element 4, but allowing at the same time a controlled radial deformation of the reinforcement 5 during the insertion of the widened head 4.1 of the securing element 4 of the exhaust pipe. The conical shape of the widened head 4.1 of the securing element 4 favors the radial expansion or deformation of the main body 2 surrounding the connecting area 3 and of the reinforcement 5 during the insertion thereof.

The helical spring which can have a cylindrical or even frustoconical shape, as can be seen in Figure 3, is formed by winding said wire. A coil is generated in each turn of the wire.

The helical spring comprises at least three coils, comprising preferably four coils, and very preferably six coils. With the reinforcement 5 assembled in the main body 2, the coils can be supported on one another sequentially, i.e., one coil rests on a contiguous coil, as shown in Figure 3, or can be arranged very close to one another, where in this case there is a distance between two consecutive coils of less than four millimeters, preferably less than two millimeters, and more preferably less than 1 millimeter. This configuration favors the opposition exerted by the reinforcement 5 against the removal of the widened head 4.1 of the securing element 4 from the connecting area 3, since it increases the rigidity of the reinforcement 5 when the securing element 4 is to be removed, as discussed.

In the preferred embodiment of the invention the main body 2 of the fixing device 1 is made of an elastomer, for example EPDM, silicone (also known internationally as VMQ), natural rubber or thermoplastic, and the reinforcement 5 is a rigid element made of, for example, a thermoplastic material or a thermosetting material, or even a metal, preferably steel. When the securing element 4 is inserted into the main body 2, it is in contact with the connecting area 3, and not directly in contact with the reinforcement 5, such that since said connecting area 3 is made of an elastomer, friction between the securing element 4 and the main body 2 is reduced, and the generation of noise in said area is prevented.

In another embodiment of the fixing device 1', the reinforcement 5 is not embedded in the main body 2, as shown in Figure 5, in which the main body 2 has been sectioned to improve understanding, this feature being the difference with respect to the preferred embodiment described.

In this embodiment, the main body 2 comprises a glass-shaped silhouette, with the connecting area 3 being arranged inside said glass-shaped silhouette, as can be seen in Figure 5. In other words, the main body 2 comprises a base 10 over which the connecting area 3 extends by way of a protuberance and a perimeter wall 11 also extending over said base 10 but such that it surrounds the connecting area 3 at least partially. In this embodiment, the helical spring is arranged on an outer surface 3.1 of the connecting area 3, the helical spring surrounding at least part of the connecting area 3, and therefore also at least part of the through hole of the connecting area 3. Therefore, in this embodiment, when the securing element 4 is inserted into the main body 2, it is also in contact with the connecting area 3 and not directly in contact with the reinforcement 5, such that since said connecting area 3 is made of an elastomer, friction between the securing element 4 and the main body 2 is reduced, and the generation of noise in said area is prevented.

By placing the reinforcement 5 externally, it is possible to modify or change the reinforcement 5 without discarding the main body 2. In the case where the widened head 4.1 of the securing element 4 varies, for example, it would be possible to change the reinforcement 5 in order to adapt it to the new securing element 4. It would also be possible to exchange the reinforcement 5 with another shorter reinforcement (with fewer coils), with a longer reinforcement (with more coils, and therefore more robust), or even modify the diameter of the wire to adapt the rigidity of the helical spring to actual usage requirements.

In this embodiment, the wire of the helical spring is wound such that it preferably forms a cylinder. The shape and size of the helical spring will actually depend on the outer shape of the connecting area 3 on which the helical spring will be supported, where said shape can even be frustoconical, for example, if necessary.

The free end of the connecting area 3 of the main body 2 of this embodiment comprises a widened retaining segment 3.2 which collaborates with the reinforcement 5 to axially retain the reinforcement 5 in the connecting area 3, as can be seen in Figure 5. Likewise, the helical spring is arranged on the outer surface 3.1 of the connecting area 3 such that the spring radially adapts to the outer surface 3.1, preventing a radial clearance between both, thereby preventing an undesired axial movement of the reinforcement 5 on the outer surface 3.1 when the fixing device 1' is in use.

Preferably, the axial direction of the connecting area 3 and of the helical spring when it is arranged in the main body 2, either embedded or externally, is parallel to the direction of insertion A of the securing element 4 in the connecting area 3.

In the case where the reinforcement 5 is arranged externally on the outer surface 3.1 of the connecting area 3, i.e., not embedded, it is not necessary to apply an adhesive between the reinforcement 5 and the main body 2.

The main body 2 of the preferred embodiment of the fixing device 1 comprising the embedded reinforcement 5 may also comprise a main body 2 with a glass silhouette in which the connecting area 3 may project from the base 10 of the main body 2 by way of a protuberance, and therefore the main body 2 could in this case have the reinforcement 5 inside the connecting area 3 (embedded), outside same, or even both, i.e., a first embedded reinforcement 5 and a second reinforcement 5 arranged on the outside of the connecting area 3, which could further increase the resistance of the reinforcements 5 to prevent the removal of the securing element 4.

Therefore, whether or not the reinforcement 5 is embedded in the main body 2 of the fixing device 1 or 1' of the invention will depend on the assembly environment of the fixing device 1 or 1'. In other words, if there is enough space in the assembly position of the fixing device 1 or 1' in the vehicle to place the reinforcement 5 externally without it colliding with adjacent elements of the vehicle, or if the geometry of the main body 2 so allows, then the reinforcement 5 could be placed externally, in a detachable manner. In contrast, i.e., if there is not enough space to place the reinforcement 5 externally, the reinforcement 5 could be placed inside the main body 2 (embedded), as described.

In any of the described embodiments, the main body 2 comprises an axial axis and the connecting area 3 comprises another axial axis, both axes being parallel to one another and to the direction of insertion A of the securing element 4 in the connecting area 3. The axial axis of the connecting area 3 is preferably off-center with respect to the axial axis of the main body 2 when the securing element 4 of the exhaust pipe is not inserted into the connecting area 3, such that when the securing element 4 of the exhaust pipe is inserted into the connecting area 3 and hangs from said connecting area 3, the axial axis of the connecting area 3 coincides with the axial axis of the main body 2, i.e., when the exhaust pipe hangs from connecting area 3, due to the weight of the exhaust pipe, the connecting area 3 centers itself with respect to the axial axis of the main body 2.

The concept of the invention also encompasses a motor vehicle comprising a chassis (second component), an exhaust pipe (first component), and the fixing device of the invention described for attaching the exhaust pipe to the chassis. The exhaust pipe (first component) comprises the securing element 4. The main body 2 can be attached to the chassis directly, however, in the preferred embodiment of the invention the main body 2 is attached to the chassis through the described support 6, which preferably is metallic, as shown in Figure 2.

## Claims

1. Fixing device for connecting an exhaust pipe to a vehicle chassis, said device (1; 1') comprising an elastic main body (2) configured to be coupled to the vehicle chassis, the main body (2) comprising a connecting area (3) in which a securing element (4) of the exhaust pipe is introduced, the securing element (4) of the exhaust pipe comprising a widened head (4.1) adapted so that, upon passing through the connecting area (3), it is retained and fixed in the main body (2), the device (1; 1') further comprising a reinforcement (5) surrounding the connecting area (3) and being adapted to reinforce the connecting area (3) preventing the removal of the widened head (4.1) of the securing element (4) of the exhaust pipe, **characterized in that** the reinforcement (5) is a helical spring having the free ends oriented towards the inside of the helical spring.

2. Fixing device according to claim 1, wherein the connecting area (3) of the main body (2) comprises a through hole with the securing element (4) passing therethrough, the helical spring being coaxial with the through hole.

3. Fixing device according to claim 1 or 2, wherein the helical spring comprises a wire the diameter of which is in a range of between 1 mm and 2.5 mm, preferably between 1.2 mm and 1.8 mm, said diameter preferably being 1.5 mm.

4. Fixing device according to any of claims 1 to 3, wherein the helical spring comprises at least three coils, preferably four coils, and more preferably six coils.

5. Fixing device according to any of claims 1 to 4, wherein the consecutive coils of the helical spring are supported on one another or arranged very close to one another, with the distance between two consecutive coils in this case preferably being less than four millimeters, more preferably less than two millimeters, and more preferably less than one millimeter.

6. Fixing device according to any of the preceding claims, wherein the securing element (4) of the exhaust pipe comprises a retaining ring (4.2) spaced from the widened head (4.1), such that an axial recess (4.3) is generated between the widened head (4.1) and the retaining ring (4.2), with the main body (2) being adapted so that, once the securing element (4) is inserted into the connecting area (3), the part of the main body (2) surrounding the connecting area (3) is housed in the axial recess (4.3) of the securing element (4), with the securing element (4) being retained and fixed in the main body (2).

7. Fixing device according to any of claims 1 to 6, wherein the main body (2) comprises a base (10) in which the connecting area (3) is arranged and a perimeter wall (11) arranged on said base (10), such that the perimeter wall (11) surrounds the connecting area (3).

8. Fixing device according to any of the preceding claims, wherein the reinforcement (5) is embedded in the main body (2), such that it surrounds the connecting area (3), the reinforcement (5) preferably being adhered to the main body (2) by means of an adhesive.

9. Fixing device according to any of the preceding claims, wherein the wire of the helical spring is wound such that it forms a frustoconical spring comprising a widened end (5.1) and a narrowed end (5.2), the narrowed end (5.2) of the reinforcement (5) being arranged in a position after the widened end (5.1) in a direction of insertion (A) of the securing element (4) of the exhaust pipe.

10. Fixing device according to claim 7, wherein the reinforcement (5) is arranged on an outer surface (3.1) of the connecting area (3) of the main body (2), such that the reinforcement (5) surrounds at least part of the connecting area (3).

11. Fixing device according to claim 10, wherein the wire of the helical spring is wound such that it forms a cylinder or a frustoconical spring.

12. Fixing device according to claim 10 or 11, wherein the free end of the connecting area (3) comprises a widened retaining segment (3.2), said widened segment (3.2) collaborating with the reinforcement (5) to axially retain the reinforcement (5) in the connecting area (3).

13. Fixing device according to any of the preceding claims, wherein the main body (2) is made of an elastomer, for example EPDM, silicone, natural rubber or thermoplastic, and the reinforcement (5) is rigid, for example, it can be made of a thermoplastic material or a thermosetting material or even metal, preferably steel.

14. Motor vehicle comprising a chassis, an exhaust pipe, and a fixing device (1; 1') according to any of the preceding claims for attaching the exhaust pipe to the chassis, the exhaust pipe comprising the securing element (4) and the main body (2) being attached to the chassis directly or through a support (6), preferably a metallic support (6).

## Patentansprüche

1. Befestigungsvorrichtung zum Verbinden eines Auspuffrohrs mit einem Fahrzeugchassis, wobei die Vorrichtung (1; 1') einen elastischen Hauptkörper (2) umfasst, der dazu konfiguriert ist, an das Fahrzeugchassis gekoppelt zu werden, wobei der Hauptkörper (2) einen Verbindungsbereich (3) umfasst, in den ein Sicherungselement (4) des Auspuffrohrs eingeführt wird, wobei das Sicherungselement (4) des Auspuffrohrs einen verbreiterten Kopf (4.1) umfasst, der dazu angepasst ist, dass er beim Durchlaufen des Verbindungsbereichs (3) im Hauptkörper (2) zurückgehalten und befestigt wird, wobei die Vorrichtung (1; 1') ferner eine Verstärkung (5) umfasst, die den Verbindungsbereich (3) umgibt und dazu angepasst ist, den Verbindungsbereich (3) zu verstärken, wobei das Entfernen des verbreiterten Kopfes (4.1) des Sicherungselements (4) des Auspuffrohrs verhindert wird, **dadurch gekennzeichnet, dass** die Verstärkung (5) eine Schraubenfeder mit zum Inneren der Schraubenfeder hin ausgerichteten freien Enden ist.

2. Befestigungsvorrichtung nach Anspruch 1, wobei der Verbindungsbereich (3) des Hauptkörpers (2) eine Durchgangsbohrung umfasst, durch die das Sicherungselement (4) hindurchgeht, wobei die Schraubenfeder koaxial zur Durchgangsbohrung ist.

3. Befestigungsvorrichtung nach Anspruch 1 oder 2, wobei die Schraubenfeder einen Draht umfasst, dessen Durchmesser in einem Bereich zwischen 1 mm und 2,5 mm, vorzugsweise zwischen 1,2 mm und 1,8 mm, liegt, wobei der Durchmesser vorzugsweise 1,5 mm beträgt.

4. Befestigungsvorrichtung nach einem der Ansprüche 1 bis 3, wobei die Schraubenfeder mindestens drei Windungen, vorzugsweise vier Windungen und besonders bevorzugt sechs Windungen umfasst.

5. Befestigungsvorrichtung nach einem der Ansprüche 1 bis 4, wobei die aufeinanderfolgenden Windungen der Schraubenfeder aufeinander abgestützt oder sehr eng aneinander angeordnet sind, wobei der Abstand zwischen zwei aufeinanderfolgenden Windungen in diesem Fall vorzugsweise weniger als vier Millimeter, bevorzugter weniger als zwei Millimeter und noch bevorzugter weniger als einen Millimeter beträgt.

6. Befestigungsvorrichtung nach einem der vorhergehenden Ansprüche, wobei das Sicherungselement (4) des Auspuffrohrs einen Rückhaltering (4.2) umfasst, der von dem verbreiterten Kopf (4.1) beabstandet ist, so dass eine axiale Aussparung (4.3) zwischen dem verbreiterten Kopf (4.1) und dem Rückhaltering (4.2) generiert wird, wobei der Hauptkörper (2) dazu angepasst ist, dass nach dem Einführen des Sicherungselements (4) in den Verbindungsbereich (3) der den Verbindungsbereich (3) umgebende Teil des Hauptkörpers (2) in der axialen Aussparung (4.3) des Sicherungselements (4) aufgenommen ist, wobei das Sicherungselement (4) in dem Hauptkörper (2) zurückgehalten und fixiert ist.

7. Befestigungsvorrichtung nach einem der Ansprüche 1 bis 6, wobei der Hauptkörper (2) eine Basis (10), in der der Verbindungsbereich (3) angeordnet ist, und eine Umfangswand (11) umfasst, die auf der Basis (10) angeordnet ist, so dass die Umfangswand (11) den Verbindungsbereich (3) umgibt.

8. Befestigungsvorrichtung nach einem der vorhergehenden Ansprüche, wobei die Verstärkung (5) in den Hauptkörper (2) eingebettet ist, so dass sie den Verbindungsbereich (3) umgibt, wobei die Verstärkung (5) vorzugsweise mittels eines Klebstoffs an dem Hauptkörper (2) haftet.

9. Befestigungsvorrichtung nach einem der vorhergehenden Ansprüche, wobei der Draht der Schraubenfeder so gewickelt ist, dass er eine kegelstumpfförmige Feder bildet, die ein verbreitertes Ende (5.1) und ein verengtes Ende (5.2) umfasst, wobei das verengte Ende (5.2) der Verstärkung (5) in einer Position nach dem verbreiterten Ende (5.1) in einer Richtung des Einführens (A) des Sicherungselements (4) des Auspuffrohrs angeordnet ist.

10. Befestigungsvorrichtung nach Anspruch 7, wobei die Verstärkung (5) an einer Außenfläche (3.1) des Verbindungsbereichs (3) des Hauptkörpers (2) angeordnet ist, so dass die Verstärkung (5) mindestens einen Teil des Verbindungsbereichs (3) umgibt.

11. Befestigungsvorrichtung nach Anspruch 10, wobei der Draht der Schraubenfeder so gewickelt ist, dass er einen Zylinder oder eine kegelstumpfförmige Feder bildet.

12. Befestigungsvorrichtung nach Anspruch 10 oder 11, wobei das freie Ende des Verbindungsbereichs (3) ein verbreitetes Rückhaltesegment (3.2) umfasst, wobei das verbreiterte Segment (3.2) mit der Verstärkung (5) zusammenwirkt, um die Verstärkung (5) axial im Verbindungsbereich (3) zurückzuhalten.

13. Befestigungsvorrichtung nach einem der vorhergehenden Ansprüche, wobei der Hauptkörper (2) aus einem Elastomer, beispielsweise EPDM, Silikon, Naturkautschuk oder Thermoplast, besteht und die Verstärkung (5) starr ist, wobei sie beispielsweise aus einem thermoplastischen Material oder einem duroplastischen Material oder sogar aus Metall, vorzugsweise Stahl, bestehen kann.

14. Kraftfahrzeug umfassend ein Chassis, ein Auspuffrohr und eine Befestigungsvorrichtung (1; 1') nach einem der vorhergehenden Ansprüche zum Anbringen des Auspuffrohrs an dem Chassis, wobei das Auspuffrohr das Sicherungselement (4) umfasst und der Hauptkörper (2) direkt oder über einen Träger (6), vorzugsweise einen Metallträger (6), an dem Chassis angebracht ist.

## Revendications

1. Dispositif de fixation pour relier un tuyau d'échappement à un châssis de véhicule, ledit dispositif (1 ; 1') comprenant un corps principal élastique (2) configuré pour être accouplé au châssis de véhicule, le corps principal (2) comprenant une zone de liaison (3) dans laquelle est introduit un élément de fixation (4) du tuyau d'échappement, l'élément de fixation (4) du tuyau d'échappement comprenant une tête élargie (4.1) adaptée de sorte que, après le passage à travers la zone de liaison (3), elle est retenue et fixée dans le corps principal (2), le dispositif (1 ; 1') comprenant en outre un renfort (5) entourant la zone de liaison (3) et étant adapté pour renforcer la zone de liaison (3) empêchant le retrait de la tête élargie (4.1) de l'élément de fixation (4) du tuyau d'échappement, **caractérisé en ce que** le renfort (5) est un ressort hélicoïdal ayant des extrémités libres orientés vers l'intérieur du ressort hélicoïdal.

2. Dispositif de fixation selon la revendication 1, dans lequel la zone de liaison (3) du corps principal (2) comprend un trou traversant avec l'élément de fixation (4) passant à travers celui-ci, le ressort hélicoïdal étant coaxial avec le trou traversant.

3. Dispositif de fixation selon la revendication 1 ou 2, dans lequel le ressort hélicoïdal comprend un fil dont le diamètre se trouve dans une plage comprise entre 1 mm et 2,5 mm, de préférence entre 1,2 mm et 1,8 mm, ledit diamètre étant de préférence de 1,5 mm.

4. Dispositif de fixation selon l'une quelconque des revendications 1 à 3, dans lequel le ressort hélicoïdal comprend au moins trois spires, de préférence quatre spires, et plus de préférence six spires.

5. Dispositif de fixation selon l'une quelconque des revendications 1 à 4, dans lequel les spires consécutives du ressort hélicoïdal sont supportées les unes sur les autres ou disposées très près les unes des autres, la distance entre deux spires consécutives dans ce cas étant de préférence inférieure à quatre millimètres, plus de préférence inférieure à deux millimètres, et plus de préférence inférieure à un millimètre.

6. Dispositif de fixation selon l'une quelconque des revendications précédentes, dans lequel l'élément de fixation (4) du tuyau d'échappement comprend une bague de retenue (4.2) espacée de la tête élargie (4.1), de sorte qu'un évidement axial (4.3) est généré entre la tête élargie (4.1) et la bague de retenue (4.2), le corps principal (2) étant adapté de sorte que, une fois l'élément de fixation (4) inséré dans la zone de liaison (3), la partie du corps principal (2) entourant la zone de liaison (3) est logée dans l'évidement axial (4.3) de l'élément de fixation (4), l'élément de fixation (4) étant retenu et fixé dans le corps principal (2).

7. Dispositif de fixation selon l'une quelconque des revendications 1 à 6, dans lequel le corps principal (2) comprend une base (10) dans laquelle est disposée la zone de liaison (3) et une paroi périmétrique (11) disposée sur ladite base (10), de sorte que la paroi périmétrique (11) entoure la zone de liaison (3).

8. Dispositif de fixation selon l'une quelconque des revendications précédentes, dans lequel le renfort (5) est incorporé dans le corps principal (2), de sorte qu'il entoure la zone de liaison (3), le renfort (5) étant de préférence adhéré au corps principal (2) par le biais d'un adhésif.

9. Dispositif de fixation selon l'une quelconque des revendications précédentes, dans lequel the fil du ressort hélicoïdal est enroulé de sorte qu'il forme un ressort tronconique comprenant une extrémité élargie (5.1) et une extrémité rétrécie (5.2), l'extrémité rétrécie (5.2) du renfort (5) étant disposée dans une position après l'extrémité élargie (5.1) dans une direction d'insertion (A) de l'élément de fixation (4) du tuyau d'échappement.

10. Dispositif de fixation selon la revendication 7, dans lequel le renfort (5) est disposé sur une surface extérieure (3.1) de la zone de liaison (3) du corps principal (2), de sorte que le renfort (5) entoure au moins une partie de la zone de liaison (3).

11. Dispositif de fixation selon la revendication 10, dans lequel le fil du ressort hélicoïdal est enroulé de sorte qu'il forme un cylindre ou un ressort tronconique.

12. Dispositif de fixation selon la revendication 10 ou 11, dans lequel l'extrémité libre de la zone de liaison (3) comprend un segment de retenue élargi (3.2), ledit segment élargi (3.2) coopérant avec le renfort (5) pour retenir axialement le renfort (5) dans la zone de liaison (3).

13. Dispositif de fixation selon l'une quelconque des revendications précédentes, dans lequel le corps principal (2) est réalisé en élastomère, par exemple en EPDM, en silicone, en caoutchouc naturel ou en matériau thermoplastique, et le renfort (5) est rigide, par exemple, il peut être réalisé en matériau thermoplastique ou en matériau thermodurcissable ou même en métal, de préférence en acier.

14. Véhicule à moteur comprenant un châssis, un tuyau d'échappement, et un dispositif de fixation (1 ; 1') selon l'une quelconque des revendications précédentes, pour attacher le tuyau d'échappement au châssis, le tuyau d'échappement comprenant l'élément de fixation (4) et le corps principal (2) étant attaché au châssis directement ou par l'intermédiaire d'un support (6), de préférence un support métallique (6).
